# EUROPÄISCHE PATENTANMELDUNG

(11) **EP 2 853 388 A1**
(43) Veröffentlichungstag der Anmeldung: **01.04.2015**
(21) Anmeldenummer: 14405066.3
(22) Anmeldetag: 20.08.2014
(51) Int. Cl.: B32B 17/10, E06B 3/54, E04B 2/88

(54) **Glaslaminat mit wenigstens einem Formteil aus Metall**

(30) Priorität: 27.09.2013 CH 13512013
(71) Anmelder: Glas Trösch Holding AG, 6374 Buochs (CH)
(72) Erfinder: Krugmann, Roland, 86159 Augsburg (DE); Kassnel-Henneberg, Bruno, 86420 Diedorf (DE)
(74) Vertreter: Kessler, Stephan

(57) **Zusammenfassung**

Die vorliegende Anmeldung betrifft ein Glaslaminat (1) mit mindestens zwei Glasplatten (2, 3). Zwischen diesen mindestens zwei Glasplatten (2, 3) ist mindestens eine erste Polymerfolie (4) sowie wenigstens ein Formteil (5) aus Metall angeordnet. Das wenigstens eine Formteil (5) ist im Wesentlichen gleich dick wie die mindestens eine erste Polymerfolie (4). Die erste Polymerfolie (4) weist eine Aussparung (10) auf, in welcher das Formteil (5) angeordnet ist. Das Formteil (5) weist ferner wenigstens einen ersten Bereich (6) auf, der mit der mindestens einen ersten Polymerfolie (4) in der Form eines Hinterschnitts in formschlüssigem Eingriff steht.

## Beschreibung

### Technisches Gebiet

Die Erfindung betrifft ein Glaslaminat mit mindestens einer zwischen zwei Glasplatten angeordneten Polymerfolie und wenigstens einem Formteil aus Metall sowie ein Verfahren zur Herstellung eines derartigen Glaslaminats.

### Stand der Technik

Glaslaminate mit mindestens einer zwischen zwei Glasplatten angeordneten Polymerfolie sind bekannt, beispielsweise aus dem Automobilbau oder aus dem Bereich der Sicherheitsgläser. Ferner sind verschiedene Verbindungsarten derartiger Gläser mit weiteren Elementen, wie beispielsweise einer Fassade im Stand der Technik bekannt.

Beispielsweise beschreibt die US 7,165,362 (Apple Computer) ein Glaslaminat als tragende Struktur, z. B. für eine Treppenstufe. Eine Glasscheibe des Laminats weist an einer Seitenkante Aussparungen auf, in welche Verbindungselemente eingeschoben und darin verklebt werden können. Durch die Verbindungselemente kann die Glaslaminatstruktur an weitere Elemente befestigt werden. Die Verbindungselemente können verschieden geformt sein, weisen jedoch bevorzugt eine gekrümmte Form auf.

Die DE 20 2006 007 201 U 1 (Seele GmbH & Co. KG) beschreibt eine Verbundglasscheibe aus mindestens zwei Einzelscheiben, wobei die äusserste Scheibe eine Vertiefung aufweist, die die Scheibe nicht gänzlich durchdringt, und die innere Scheibe eine entsprechende Durchgangsbohrung umfasst, durch welche ein Verbindungsstück gesteckt werden kann, welches in die Vertiefung der äusseren Scheibe eingreift. Die Vertiefung beziehungsweise die Bohrung in den Glasscheiben können auch einen Hinterschnitt oder eine sonstige kegelförmige Kontur aufweisen.

DE 202 18 215 U1 (Platz Karl Otto) offenbart ein Befestigungsmittel für Verbund-glasscheiben, welches ein Klemmelement umfasst, das eine Klemmkraft nur auf eine Trägerglasscheibe der Verbundglasscheibe ausübt. Das Klemmelement wird hierzu durch eine Aussparung in der Trägerglasscheibe hindurchgeführt, wobei ein Flanschteil des Klemmelements die Trägerglasscheibe hintergreift.

SE 519551 C (Fasadglas Backlin AB) beschreibt ein Glaslaminat mit drei Glasscheiben, bei dem ein Verankerungselement in einer Aussparung an einer Seitenkante der mittleren Glasscheibe eingesetzt ist. Das Verankerungselement ist dabei in der Aussparung über die Polymerzwischenschichten mit den beiden äusseren Glasscheiben verbunden.

EP 1 297 237 (Saint-Gobain Glass France) offenbart eine Befestigungsvorrichtung für ein mehrschichtiges Wandelement, wie beispielsweise für ein Verbundglas. Eine gebäudeseitige Scheibe weist eine Durchgangsbohrung auf während eine aussenseitige Scheibe eine Vertiefung aufweist, welche koaxial zur Durchgangsbohrung angeordnet ist. Ein Befestigungselement ist durch die Durchgangsbohrung eingeführt, wobei ein Endabschnitt dieses Befestigungselements in die Vertiefung der aussenseitigen Scheibe eindringt. Der Hohlraum zwischen dem Befestigungselement und der Scheiben wird durch eine ausgehärtete Füllmasse ausgefüllt. Die Vertiefung kann dabei einen grösseren Durchmesser aufweisen als die Durchgangsbohrung, womit ein zur Befestigung des Befestigungselements geeigneter Hinterschnitt gebildet wird.

Diese Befestigungsarten für Verbindungselemente weisen alle den Nachteil auf, dass entweder Öffnungen oder Aussparungen in eine oder mehrere der Glasscheiben des Glaslaminats eingearbeitet werden müssen. Dies stellt insbesondere bei der Herstellung von Glaslaminaten mit variablen Grössen und unterschiedlicher Positionierung der Verbindungselemente einen nicht unerheblichen Mehraufwand dar, der die Herstellung derartiger Glaslaminate verlangsamt und die Herstellung insgesamt verteuert.

Ausserdem ist bei einer Befestigung der Verbindungselemente über eine Polymerzwischenschicht oder einem separat aufgetragenen Kleber die Haftung dieser Verbindungselemente dauerhaft nur schwer nachweisbar und kann durch äussere Witterungseinflüsse wie Sonneneinstrahlung, Feuchtigkeit oder Temperaturwechsel beeinträchtigt werden. Somit kann nach längerer Zeit die Haftung zwischen Verbindungselement und Glaslaminat nachlassen, was die Anwendungssicherheit eines derartigen Glaslaminates verschlechtert. Für konstruktive Anwendungen bei denen planmässig Lasten abgetragen werden, kann dies bedeuten, dass eine derartige Anwendung nicht möglich ist. Zudem schwächen in die Glasscheiben eingebrachte Aussparungen oder Öffnungen das Glasbauteil infolge erhöhter Spannungen im Bereich der Aussparungen oder Öffnungen.

### Darstellung der Erfindung

Aufgabe der Erfindung ist es, ein dem eingangs genannten technischen Gebiet zugehörendes Glaslaminat zu schaffen, bei welchem auf eine effiziente und kostengünstige Art ein Formteil aus Metall, insbesondere ein Verbindungselement, eingebracht werden kann, wobei eine sichere und zuverlässige Verbindung zwischen dem Formteil und dem Laminat erreicht wird.

Die Lösung der Aufgabe ist durch die Merkmale des Anspruchs 1 definiert. Das erfindungsgemässe Glaslaminat umfasst mindestens zwei Glasplatten, wobei zwischen diesen mindestens zwei Glasplatten mindestens eine erste Polymerfolie sowie wenigstens ein Formteil aus Metall angeordnet sind. Das wenigstens eine Formteil ist im Wesentlichen gleich dick wie die mindestens eine erste Polymerfolie. Die Polymerfolie weist eine Aussparung auf, in welcher das Formteil angeordnet ist. Das wenigstens eine Formteil weist ferner wenigstens einen ersten Bereich auf, der mit der mindestens einen ersten Polymerfolie in der Form eines Hinterschnitts in formschlüssigem Eingriff steht. Ferner ist das wenigstens eine Formteil im Bereich einer Kante des Glaslaminats angeordnet und weist eine Breite auf, welche weniger als 10 % der Länge der Kante beträgt. Vorzugsweise beträgt die Breite des wenigstens einen Formteils weniger als 5 % der Länge der Kante.

Durch den formschlüssigen Eingriff des Formteils in der mindestens einen ersten Polymerfolie wird das Formteil zusätzlich in der Ebene der Glasplatten ausreisssicher verankert. Um das Formteil im Glaslaminat zu halten ist bei der vorliegenden Erfindung daher kein zusätzliches Verkleben des Formteils nötig. Dadurch dass das wenigstens eine Formteil eine Breite aufweist, welche um einige Grössenordnungen kleiner ist als die Länge der Kante des Glaslaminats, in dessen Bereich das wenigstens eine Formteil angeordnet ist, kann eine im Wesentlichen nur punktförmige Anordnung des wenigstens einen Formteils erzielt werden. Die gedrungene Form des einlaminierten Formteils reduziert die grundsätzlich auftretenden Spannungen im Glaslaminat infolge der unterschiedlichen Temperaturausdehnungskoeffizienten zwischen Metall und Folie, was die Dauerhaftigkeit des Glaslaminats im Bereich des einlaminierten Formteils verbessert.

Weiter bevorzugt weist das wenigstens eine Formteil eine Breite auf, welche kleiner als 5°% der Länge der Kante des Glaslaminats ist, insbesondere kleiner als 2.5 % oder kleiner als 1 %. Insbesondere bei Anordnung von mehreren Formteilen im Bereich derselben Kante des Glaslaminats dürfen deren zusammenaddierte Breiten 25 % der Länge der Kante nicht überschreiten. Insbesondere bevorzugt sollten die zusammenaddierten Breiten 10% der Länge der Kante nicht überschreiten.

Im Folgenden wird "Laminat" synonym zu "Glaslaminat" verwendet.

Die mindestens zwei Glasplatten können beliebige Glasplatten sein, welche für ein Sicherheits- oder Verbundglas eingesetzt werden. Die Glasplatten können dabei beliebige Dimensionen sowie eine beliebige Form aufweisen, welche dem jeweiligen Einsatzzweck des Glaslaminats entspricht. Auch die Dicke der eingesetzten Glasplatten kann je nach Einsatzzweck des Glaslaminats variieren.

Die erste Polymerfolie wird als Zwischenschicht des Laminats verwendet. Die erste Polymerfolie kann aus jedem geeigneten Polymermaterial bestehen, welche eine genügend starke Haftung zu den Glasplatten und zudem eine genügend hohe Zugfestigkeit aufweist, dass eine sichere Verankerung des Formteils im Laminat sichergestellt ist. Eine derartige Zwischenschichtfolie wird beispielsweise von der Firma DuPont unter dem Namen SentryGlas® lonoplast vertrieben.

Die Polymerfolie ist besonders bevorzugt durchsichtig, so dass eine unverfälschte Sicht durch das Glaslaminat ermöglicht wird. Alternativ kann die Polymerfolie jedoch auch eine Färbung aufweisen oder mit einem Bild, einem Schriftzug oder ähnlichem bedruckt sein. Ferner kann die Polymerfolie auch eine unterschiedliche Durchlässigkeit für Strahlung ausserhalb des sichtbaren Bereichs aufweisen, insbesondere eine kleinere Durchlässigkeit für UV-Strahlen.

Das Formteil kann aus einem beliebigen Metall bestehen, welches sich für die spezifische Funktion des Formteils eignet, wie beispielsweise aus Stahl, Aluminium oder Titan. Die Dicke des Formteils entspricht dabei vorzugsweise der Dicke der verwendeten Polymerfolie. Diese Dicke beträgt zum Beispiel von 0.8 mm bis 3.0 mm. Im Rahmen dieser Anmeldung bedeutet "im Wesentlichen" eine Abweichung von ±10 %.

Die Aussparung in der ersten Polymerfolie ist vorzugsweise derart geformt und dimensioniert, dass das Formteil bündig in die Aussparung passt. Damit wird verhindert, dass das Formteil innerhalb des Glaslaminats ein Bewegungsspiel aufweist, was sich insbesondere bei einer Verwendung des Formteils als Verankerung des Glaslaminats negativ auswirken würde.

Das Formteil kann jede beliebige Form und Dimension aufweisen, die seiner jeweiligen Funktion entspricht. Eine einzige Einschränkung zur Dimension des Formteils liegt in der Dicke des Formteils, welche - wie bereits weiter oben angeführt ist - im Wesentlichen der Dicke der eingesetzten ersten Polymerfolie entspricht. Zudem muss das Formteil im ersten Bereich eine Form aufweisen, welche mit der Aussparung der ersten Polymerfolie im Sinne eines Hinterschnitts in formschlüssigem Eingriff steht. Insbesondere kann das Formteil mindestens eine Ausweitung und/oder mindestens einen Einschnitt aufweisen, die/der in einer Ebene parallel zur Ebene der mindestens zwei Glasplatten das wenigstens eine Formteil verbreitern und/oder verkleinern. Der mindestens eine Einschnitt und/oder die mindestens eine Ausweitung kann jede geeignete Form aufweisen, insbesondere polygonal oder gerundet. Weiter bevorzugt kann das wenigstens eine Formteil auch eine Öffnung mit einer beliebigen Form aufweisen, welche innerhalb der Fläche des Formteils angeordnet ist. Bei einer derartigen Ausgestaltung wird ein entsprechend ausgeschnittenes Element der mindestens einen ersten Polymerfolie in diese Öffnung des Formteils gelegt, um eine Klebverbindung zwischen den mindestens zwei Glasplatten innerhalb dieser Öffnung zu ermöglichen. Besonders bevorzugt wird eine innere Öffnung mit einem weiteren Bereich mit Hinterschnitt kombiniert, um die Verankerung des Formteils innerhalb des Glaslaminats zu erhöhen.

Je nach vorgesehenem Einsatz des Glaslaminats können auch noch weitere Laminatschichten mit jeweils einer Polymerzwischenschicht, welche zwischen zwei Glasplatten angeordnet ist, vorgesehen sein. Dabei kann in jeder Zwischenschicht wenigstens ein Formteil angeordnet sein oder alternativ nur in einer von mehreren Zwischenschichten eines mehrschichtigen Glaslaminats.

Es kann weiter bevorzugt auch vorgesehen sein, dass mehrere Formteile zwischen zwei Glasplatten angeordnet sind. Diese mehreren Formteile können dabei dieselbe Form und Grösse oder alternativ auch unterschiedliche Formen und Grössen aufweisen, je nachdem wofür die einzelnen Formteile vorgesehen sind.

Ferner ist es auch möglich, mehrere Schichten der ersten Polymerfolie übereinander zwischen den mindestens zwei Glasplatten anzuordnen. Dabei kann jede dieser ersten Polymerfolien eine entsprechende Aussparung für das wenigstens eine Formteil aufweisen. Das Formteil kann in diesem Fall eine gleiche Dicke aufweisen, wie die mehreren aufeinandergelegten ersten Polymerfolien.

Vorzugsweise weist das wenigstens eine Formteil einen zweiten Bereich auf, der über die Kante des Glaslaminats herausragt. Dadurch kann das Formteil als Verankerung des Glaslaminats zu einer weiteren Struktur, beispielsweise eines Fassadengerüsts, eines Türoder Fensterscharniers oder ähnliches eingesetzt werden. Alternativ kann das Formteil jedoch auch als elektrischer Leiter vorgesehen sein, um beispielsweise Strom oder Datensignale in oder durch das Glaslaminat zu führen.

Besonders bevorzugt sind im Bereich einer Kante, vorzugsweise jedoch von zwei entgegengesetzten Kanten des Glaslaminats mehrere, insbesondere zwei Formteile angeordnet, die einen zweiten Bereich aufweisen, der über die Kante hinausragt. Dadurch lässt sich das Glaslaminat über das Formteil einfach und sicher mit einer weiteren Struktur verbinden.

Vorzugsweise weist das Formteil im wenigstens einen zweiten Bereich mindestens ein Verbindungselement auf. Zwischen dem Verbindungselement und der Kante des Glaslaminats ist mindestens eine Schicht der wenigstens einen ersten Polymerfolie angeordnet.

Dadurch kann in einer besonders stabilen und effizienten Weise ein Verbindungselement an die Kante des Glaslaminats stirnseitig anlaminiert werden. Durch das Verbindungselement kann das wenigstens eine Formteil besonders vorteilhaft zur Verankerung des Glaslaminats an eine weitere Struktur verwendet werden. Insbesondere kann das Verbindungselement mindestens eine Verbindungsstruktur, wie beispielsweise eine Bohrung, eine Gewindebohrung, ein Rastelement oder dergleichen aufweisen, mit deren Hilfe sich das Verbindungselement besonders einfach und effizient mit einer weiteren Struktur verbinden lässt.

Weiter bevorzugt weist das Verbindungselement eine Form auf, bei der mindestens eine Seitenfläche des Verbindungselements bündig zu der Oberfläche mindestens einer Glasplatte des Glaslaminats steht. Dadurch kann eine ästhetisch besonders ansprechende Einheit von Glasoberfläche und Verbindungselement geschaffen werden.

Insbesondere bevorzugt ist das Verbindungselement als Quader ausgestaltet, von dem je eine Fläche bündig zu je einer der mindestens zwei Glasplatten des Glaslaminats steht.

Bevorzugt weist die mindestens eine Schicht mindestens eine Ausnehmung auf, in welcher ein Element aus einem thermoplastischen Polymer, insbesondere aus Polymethylmethacrylat, mit gleicher Dicke wie die mindestens eine Schicht angeordnet ist.

Dadurch kann der Abstand zwischen dem Verbindungselement und der Kante des Glaslaminats exakt eingehalten werden, selbst wenn während des Laminierens die mindestens eine Schicht - wie auch die mindestens eine erste Polymerfolie innerhalb des Glaslaminats - durch Erwärmung deutlich über die Glasübergangstemperatur des verwendeten Polymers sehr weich wird. Dies erlaubt die Aufrechterhaltung der Position des Verbindungselements während des Laminierungsvorganges. Dadurch wird es möglich, Formteile mit Verbindungselementen anwendungsspezifisch und präzis an den Kanten eines Glaslaminats anzuordnen, ohne dass im weiteren Herstellungsprozess des Glaslaminats diese präzise Positionierung verloren geht.

Bevorzugt umfasst die mindestens eine erste Polymerfolie ein Polymer mit einem Elastizitätsmodul von mindestens 100 N/mm² bei einer Temperatur von 50 C und einer Belastungsdauer von ca. 3 Sekunden oder weniger.

Dadurch lässt sich ein besonders stabiles Glaslaminat erzeugen, welches selbst bei einer erhöhten Temperatur, z.B. infolge Sonneneinstrahlung kurzzeitigen Belastungsspitzen standhält.

Vorzugsweise umfasst die mindestens eine erste Polymerfolie ein Polymer mit einem Elastizitätsmodul von mindestens 15 N/mm² bei 50°C und einer Belastungszeit von 1 Stunde.

Mit einer derartigen Folie lassen sich die Anforderungen an eine absturzsichere Verglasung selbst bei einer erhöhten Temperatur erfüllen.

Vorzugsweise ist zwischen der mindestens einen ersten Polymerfolie und wenigstens einer, bevorzugt beider der mindestens zwei Glasplatten mindestens eine zweite Polymerfolie angeordnet, wobei diese zweiten Polymerfolien im Bereich der Aussparung der mindestens einen ersten Polymerfolie zwischen dem wenigstens einen Formteil und den mindestens zwei Glasplatten liegen.

Durch die Anordnung von mindestens einer zweiten Polymerfolie zwischen der ersten Polymerfolie und der ersten Glasplatte und/oder der zweiten Glasplatte lässt sich zusätzlich eine Haftverbindung zwischen dem Formteil und den mindestens zwei Glasplatten herstellen, was die Befestigung des Formteils innerhalb des Glaslaminats zusätzlich erhöht.

Je nach Anwendung können beidseitig zwischen der ersten Polymerfolie und den mindestens zwei Glasplatten auch mehr als nur eine zweite Polymerfolie angeordnet werden, je nachdem, welche Eigenschaften für das Glaslaminat gewünscht sind.

Die mindestens eine erste Polymerfolie sollte zudem eine genügend grosse nachgewiesene Haftung zu den mindestens zwei Glasplatten aufweisen.

Bevorzugt umfasst die Polymerfolie ein Co-Polymer aus Ethen und Methacrylsäure. Insbesondere bevorzugt umfasst eine derartige Polymerfolie zusätzlich Metallionen. Eine derartige Polymerfolie weist gute Hafteigenschaften auf Glas, eine hohe Zugfestigkeit sowie ein Elastizitätsmodul in einem geeigneten Bereich auf. Damit kann ein Glaslaminat geschaffen werden, welches zugleich steif und stabil ist sowie für ein darin eingebrachtes Formteil aus Metall gewünschte hohe Ausreisskraft ermöglicht.

Die vorliegende Erfindung betrifft ferner ein Verfahren zur Herstellung eines Glaslaminats mit mindestens zwei Glasplatten, wobei zwischen diesen mindestens zwei Glasplatten eine erste Polymerfolie sowie wenigstens ein Formteil aus Metall angeordnet sind. Zunächst werden eine erste Glasplatte, das wenigstens eine Formteil aus Metall sowie die erste Polymerfolie vorgelegt. Das wenigstens eine Formteil umfasst mindestens einen ersten Bereich, der eine Form mit einem Hinterschnitt aufweist. Danach wird eine Aussparung in der ersten Polymerfolie hergestellt, wobei die Aussparung der Form und Grösse des wenigstens einen Formteils entspricht. Die erste Polymerfolie wird auf die erste Glasplatte aufgelegt und das wenigstens eine Formteil wird in die Aussparung eingelegt. Die Form des mindestens einen ersten Bereichs des Formteils mit dem Hinterschnitt ist derart beschaffen, dass dieser mindestens eine erste Bereich des Formteils mit der ersten Polymerfolie über den Hinterschnitt formschlüssig in Eingriff steht. Danach wird eine zweite Glasplatte aufgelegt und die beiden Glasplatten durch Erhitzen der ersten Polymerfolie miteinander zu einem Glaslaminat vereinigt.

Je nach Anwendung können vor dem Vereinigen der Glasplatten noch weitere Laminatschichten, jeweils bestehend aus mindestens einer Polymerfolie, welche zwischen zwei Glasplatten angeordnet ist, hinzugefügt werden.

Die Vereinigung der mindestens zwei Glasplatten, sprich der Laminierungsschritt, kann auch in Teilschritte unterteilt werden. Beispielsweise kann zunächst ein Vorlaminat durch Erwärmung der Polymerfolie erzeugt werden, welches anschliessend unter Anwendung von Druck und Hitze zum fertigen Glaslaminat verarbeitet wird.

Vorzugsweise wird mindestens eine zweite Polymerfolie vor dem Auflegen der ersten Polymerfolie auf die erste Glasplatte aufgelegt und dann anschliessend die erste Polymerfolie auf diese mindestens eine zweite Polymerfolie aufgelegt.

Dadurch kann eine zusätzliche Polymerfolienschicht dem Glaslaminat zugefügt werden. Da die mindestens eine zweite Polymerfolie keine Aussparung für das wenigstens eine Formteil aufweist, wird in der Folge das wenigstens eine Formteil auf diese mindestens eine zweite Folie aufgelegt, womit im fertiggestellten Glaslaminat das wenigstens eine Formteil zusätzlich auf der ersten Glasplatte haftet.

Bevorzugt wird vor dem Auflegen der zweiten Glasplatte mindestens eine zweite Polymerfolie auf die erste Polymerfolie und das Formteil aufgelegt. Dadurch kann wiederum mindestens eine zusätzliche Polymerfolienschicht dem Glaslaminat hinzugefügt werden. Insbesondere bevorzugt wird je zwischen der ersten Glasplatte und der ersten Polymerfolie sowie zwischen dieser und der zweiten Glasplatte mindestens eine zweite Polymerfolie aufgelegt. Dadurch kann das wenigstens eine Formteil zusätzlich beidseitig kraftschlüssig mit den beiden Glasplatten verbunden werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine perspektivische Ansicht eines erfindungsgemässen Glaslaminats;
- Fig. 2: eine Draufsicht auf ein Glaslaminat mit Formteilen unterschiedlicher Form;
- Fig. 3: einen Schnitt durch das Glaslaminat nach Fig. 1;
- Fig. 4a, 4b: zwei Draufsichten eines Ausschnitts eines Glaslaminats mit einem Formteil mit zwei alternativen Ausführungsformen eines Verbindungselements;
- Fig. 5: einen Schnitt durch das Glaslaminat nach Fig. 4a;
- Fig. 6: einen Schnitt durch ein Glaslaminat nach Fig. 4a mit einer alternativen Ausführungsform eines Verbindungselements.

Grundsätzlich sind in den Figuren gleiche Teile mit gleichen Bezugszeichen versehen.

### Wege zur Ausführung der Erfindung

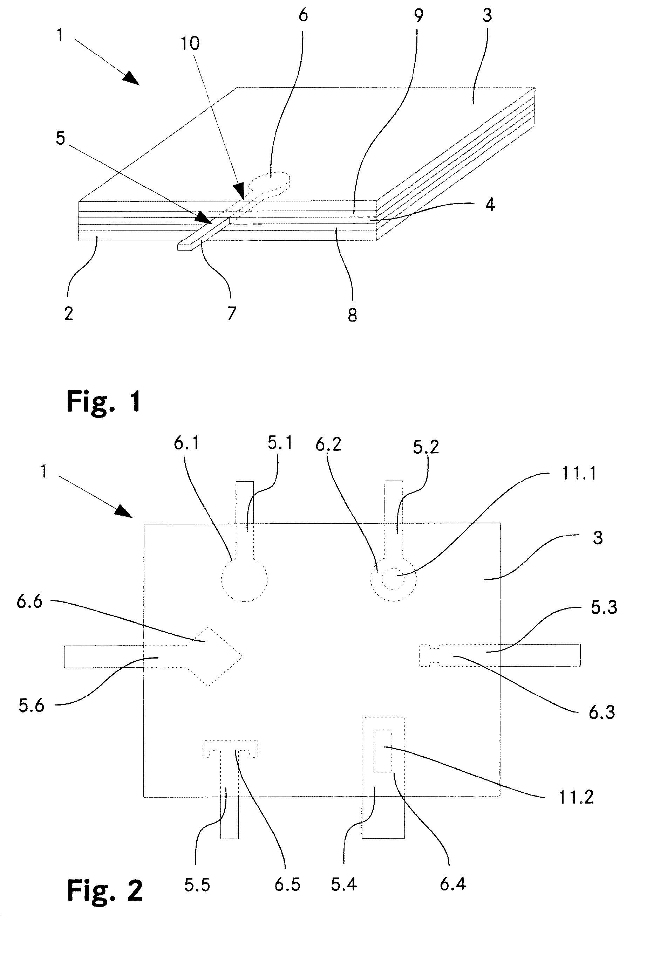

Die Fig. 1 zeigt ein erfinderisches Glaslaminat 1 in einer perspektivischen Ansicht. Das Glaslaminat umfasst eine erste Glasplatte 2 sowie eine zweite Glasplatte 3. Zwischen den beiden Glasplatten 2, 3 ist eine erste Polymerfolie 4 sowie zwei Schichten der zweiten Polymerfolie 8, 9 angeordnet. Die erste Polymerfolie 4 ist hierbei zwischen den beiden Schichten der zweiten Polymerfolie 8, 9 eingelegt. Ein zweiter Bereich 7 eines Formteils 5 aus Metall ragt über eine Kante des Glaslaminats heraus, während ein erster Bereich 6 des Formteils 5 in einer Aussparung 10 der ersten Folie 4 eingelegt ist. Der erste Bereich 6 des Formteils 4 weist eine Form auf, welche im Sinne eines Hinterschnitts mit der ersten Polymerfolie 4 formschlüssig in Eingriff steht. Ferner ist das Formteil 5 durch die zwischen diesem und den beiden Glasplatten 2, 3 vorhandenen Schichten der zweiten Polymerfolien 8, 9 zusätzlich kraftschlüssig mit den beiden Glasplatten 2, 3 verbunden. Durch die Form des zweiten Bereichs 6 des Formteils 5 ist dieses verrutschfest und ausreisssicher im Glaslaminat 1 gehalten. Die Dicke des Formteils 5 entspricht im Wesentlichen der Dicke der ersten Polymerfolie 4. Ferner weist die Aussparung 10 eine Form und Grösse auf, welche der Form und Grösse des Formteils 5 entspricht. Dadurch wird eine bündige Anordnung des Formteils 5 im Glaslaminat 1 ermöglicht.

Auf der Fig. 2 sind verschiedene Formteile 5.1, 5.2, 5.3, 5.4, 5.5, 5.6 mit unterschiedlichen Formen des zweiten Bereichs 6.1, 6.2, 6.3, 6.4, 6.5, 6.6 beispielhaft dargestellt. Damit der zweite Bereich 6.1, 6.2, 6.3, 6.4, 6.5, 6.6 eines Formteils 5.1, 5.2, 5.3, 5.4, 5.5, 5.6 im Sinne eines Hinterschnitts mit der ersten Polymerfolie 4 formschlüssig in Eingriff stehen kann, muss dieser zweite Bereich 6.1, 6.2, 6.3, 6.4, 6.5, 6.6 eine Ausweitung und/oder mindestens einen Einschnitt oder alternativ eine Öffnung 11.1, 11.2 aufweisen, welche parallel zur Ebene der Glasplatten 2, 3 liegt. Das dritte Formteil 5.3 zeigt beispielhaft einen zweiten Bereich 6.3 mit einem Einschnitt, während die Formteile 5.1, 5.5, 5.6 erste Bereiche 6.1, 6.5, 6.6 mit Ausweitungen aufweisen. Das zweite Formteil 5.2 sowie das vierte Formteil 5.4 der Fig. 2 zeigen beispielhaft Varianten des ersten Bereichs 6.2, 6.4 mit einer Öffnung 11.1, 11.2. Innerhalb der Öffnung 11.1, 11.2 ist ein entsprechend dimensioniertes Stück der ersten Folie 4 angeordnet, um die nötige Hinterschnittwirkung zu erzielen.

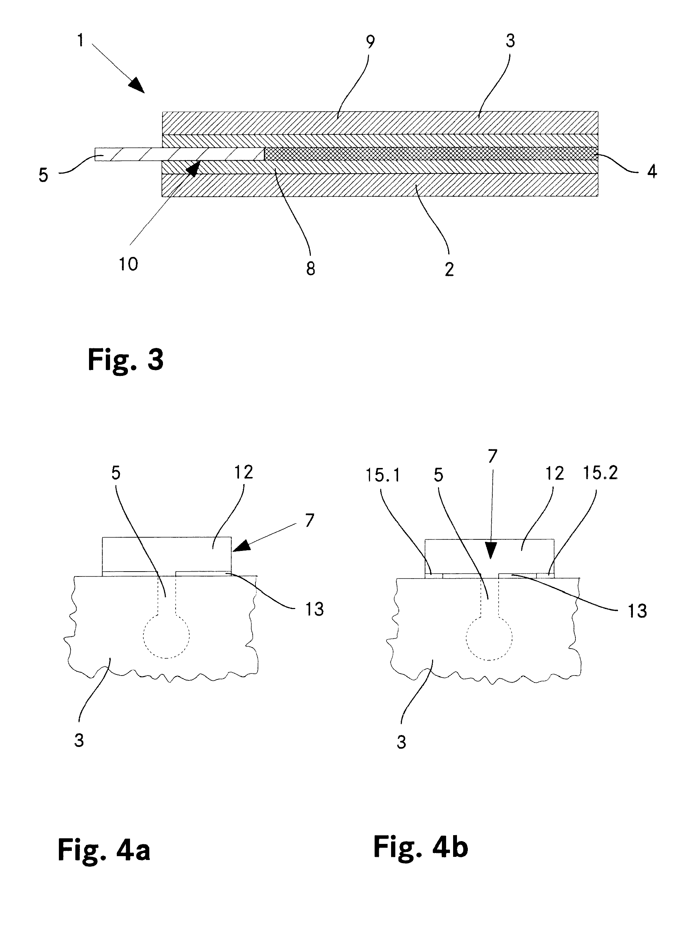

Fig. 3 zeigt einen Schnitt durch das Glaslaminat 1 aus der Fig. 1. Auf der ersten Glasplatte 2 ist eine erste Schicht der zweiten Folie 8 aufgelegt, welche im Wesentlichen die gesamte Oberfläche der ersten Glasplatte 2 bedeckt. Auf dieser ersten Schicht der zweiten Polymerfolie 8 ist die erste Polymerfolie 4 aufgelegt, welche eine Aussparung 10 für das Formteil 5 aufweist. Entsprechend ist das Formteil 5 in dieser Aussparung 10 eingelegt.

Gut ersichtlich ist die im Wesentlichen identische Dicke des Formteils 5 mit der Dicke der ersten Polymerfolie 4. Über der ersten Polymerfolie 4 und dem Formteil 5 ist eine zweite Schicht der zweiten Polymerfolie 9 aufgelegt. Auf dieser zweiten Schicht der zweiten Folie 9 liegt die zweite Glasplatte 9.

Fig. 4a zeigt einen Ausschnitt eines Glaslaminats 1 mit einem Formteil 5 mit einem Verbindungselement 12, der im zweiten Bereich 7 des Formteils 5 angeordnet ist. Das Verbindungselement 12 ist dabei einstückig mit dem Formteil 5 ausgebildet. Alternativ könnte das Verbindungselement 12 auch stoffschlüssig mit dem zweiten Bereich 7 des Formteils 5 verbunden sein, z.B. über eine Schweissnaht. Zwischen dem Verbindungselement 12 und einer Kante des Glaslaminats, sprich einer Kante der zwei Glasplatten 2, 3, ist eine Schicht 13 der ersten Polymerfolie 4 angeordnet.

Fig. 4b zeigt einen Ausschnitt eines Glaslaminats 1 mit einer alternativen Variante eines Verbindungselements 12. Im Unterschied zur Ausführungsform nach Fig. 4a weist die mindestens eine Schicht 13 der ersten Polymerfolie 4 zwei Ausnehmungen 14.1, 14.2 auf, in welchen je ein Element 15.1, 15.2 aus einem thermoplastischen Polymer, insbesondere aus Polymethylmethacrylat, angeordnet ist. Durch die Anordnung der Elemente 15.1, 15.2 kann verhindert werden, dass sich das Verbindungselement 12 und somit das ganze Formteil 5 aufgrund des wegen des Laminierungsprozesses aufgeweichten Polymers der ersten Polymerfolie 4 sowie der mindestens einen Schicht 13 verschiebt, insbesondere dass sich dieses in Bezug auf die Kante das Glaslaminats 1 neigt.

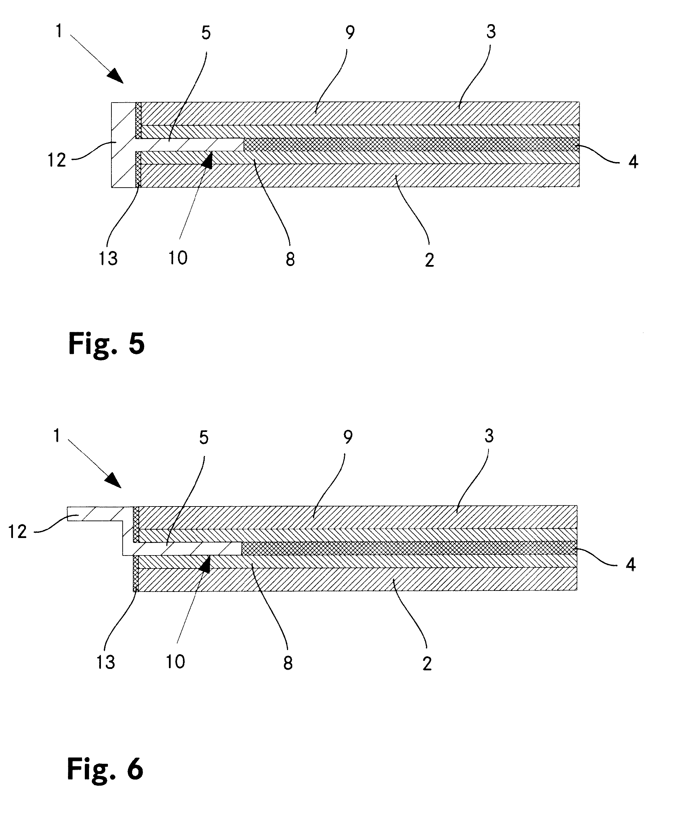

Fig. 5 stellt einen Schnitt durch ein Glaslaminat 1 nach Fig. 4a dar. Gut ersichtlich ist, dass das Verbindungselement 12 im Wesentlichen dieselbe Dicke aufweist, wie das Glaslaminat 1. Ferner ist auch die Schicht 13 der ersten Polymerfolie 4, welche zwischen dem Verbindungselement 12 und der Kante des Glaslaminats 1 angeordnet ist, gut zu erkennen. Das Verbindungselement 12 ist in dieser Ausführungsform quaderförmig ausgebildet, wobei je eine Unter- und Oberseite des Verbindungselements 12 bündig zu einer Oberfläche der ersten Glasplatte 2 beziehungsweise der zweiten Glasplatte 3 steht.

Fig. 6 stellt ein Glaslaminat 1 nach Fig. 4a mit einer alternativen Ausführungsform eines Verbindungselements 12 dar. Das Verbindungselement 12 weist einen zweifachen rechtwinkligen Knick auf, so dass eine Oberfläche des Verbindungselements 12 bündig mit der Oberfläche der zweiten Glasplatte 3 steht.

Grundsätzlich ist jede beliebige Form für das Verbindungselement 12 denkbar, womit eine hohe Flexibilität im Hinblick auf mögliche Einsatzorte und -zwecke gegeben ist. Die mindestens eine Schicht 13 der beiden Ausführungsformen der Fig. 5 und Fig. 6 können selbstverständlich auch analog zu der Ausführungsform nach Fig. 4b mit mindestens einer Ausnehmung 14 sowie einem darin angeordneten Element 15 versehen sein.

## Patentansprüche

1. Glaslaminat mit mindestens zwei Glasplatten (2, 3), wobei zwischen diesen mindestens zwei Glasplatten (2, 3) mindestens eine erste Polymerfolie (4) sowie wenigstens ein Formteil (5) aus Metall angeordnet sind, und wobei das wenigstens eine Formteil (5) im Wesentlichen gleich dick ist wie die mindestens eine erste Polymerfolie (4) und in einer Aussparung (10) dieser mindestens einen ersten Polymerfolie (4) angeordnet ist, **dadurch gekennzeichnet, dass** das wenigstens eine Formteil (5) wenigstens einen ersten Bereich (6) aufweist, der mit der mindestens einen ersten Polymerfolie (4) in der Form eines Hinterschnitts in formschlüssigem Eingriff steht, wobei das wenigstens eine Formteil (5) im Bereich einer Kante des Glaslaminats angeordnet ist und eine Breite aufweist, welche weniger als 10%, vorzugsweise weniger als 5 % der gesamten Länge der Kante beträgt.

2. Glaslaminat nach Anspruch 1, **dadurch gekennzeichnet, dass** das wenigstens eine Formteil (5) einen zweiten Bereich (7) aufweist, der über die Kante des Glaslaminats (1) herausragt.

3. Glaslaminat nach Anspruch 2, **dadurch gekennzeichnet, dass** das Formteil im wenigstens einen zweiten Bereich (7) mindestens eine Verbindungstruktur (12) aufweist, wobei zwischen der Verbindungsstruktur und der Kante des Glaslaminats (1) mindestens eine Schicht (13) der wenigstens einen ersten Polymerfolie (4) angeordnet ist.

4. Glaslaminat nach Anspruch 3, **dadurch gekennzeichnet, dass** die mindestens eine Schicht (13) mindestens eine Ausnehmung (14) aufweist, in welcher ein Element (15) aus einem thermoplastischen Polymer, insbesondere aus Polymethylmethacrylat, mit gleicher Dicke wie die mindestens eine Schicht (13) angeordnet ist.

5. Glaslaminat nach einem der Ansprüche 1 bis 4, **dadurch gekennzeichnet, dass** die erste Polymerfolie (4) ein Polymer umfasst, welches ein Elastizitätsmodul von mindestens 100 N/mm² bei einer Temperatur von 50°C und einer Belastungsdauer von weniger als 3 Sekunden aufweist.

6. Glaslaminat nach einem der Ansprüche 1 bis 5, **dadurch gekennzeichnet, dass** die mindestens eine erste Polymerfolie (4) ein Polymer mit ein Elastizitätsmodul von mindestens 15 N/mm² bei 50°C und einer Belastungszeit von 1 Stunde aufweist.

7. Glaslaminat nach einem der Ansprüche 1 bis 6, **dadurch gekennzeichnet, dass** zwischen der mindestens einen erste Polymerfolie (4) und wenigstens einer, bevorzugt beider der mindestens zwei Glasplatten (2, 3) mindestens eine zweite Polymerfolie (8, 9) angeordnet ist, wobei diese zweiten Polymerfolien (8, 9) im Bereich der Aussparung (10) zwischen dem wenigstens einen Formteil (5) und den mindestens zwei Glasplatten (2, 3) liegen.

8. Verfahren zur Herstellung eines Glaslaminats (1) mit mindestens zwei Glasplatten (2, 3), wobei zwischen diesen mindestens zwei Glasplatten (2, 3) eine erste Polymerfolie (4) sowie wenigstens ein Formteil (5) aus Metall angeordnet sind, insbesondere nach einem der Ansprüche 1 bis 6, umfassend die Schritte:
a) Vorlegen einer ersten Glasplatte (2);
b) Vorlegen des wenigstens einen Formteils (5) aus Metall und der ersten Polymerfolie (4), wobei das wenigstens eine Formteil (5) mindestens einen ersten Bereich (6) umfasst, der einen Hinterschnitt aufweist;
c) Herstellung einer Aussparung (10) in der ersten Polymerfolie (4), wobei die Aussparung (10) der Form und Grösse des wenigstens einen Formteils (5) entspricht;
d) Auflegen der ersten Polymerfolie (4) auf die erste Glasplatte (2);
e) Einlegen des wenigstens einen Formteils (5) in die Aussparung (10);
f) Auflegen einer zweiten Glasplatte (3);
g) Vereinigen der zwei Glasplatten (2, 3) mindestens durch Erhitzen der ersten Polymerfolie (4).

9. Verfahren nach Anspruch 8, **dadurch gekennzeichnet, dass** mindestens eine Schicht einer zweiten Polymerfolie (8) auf die erste Glasplatte (2) aufgelegt wird und anschliessend die erste Polymerfolie (4) auf diese mindestens eine Schicht der zweiten Polymerfolie (8) aufgelegt wird.

10. Verfahren nach einem der Ansprüche 8 oder 9, **dadurch gekennzeichnet, dass** vor dem Auflegen der zweiten Glasplatte (3) mindestens eine Schicht einer zweiten Polymerfolie (9) auf die erste Polymerfolie (4) und das Formteil (5) aufgelegt wird.
